Europäisches Patentamt

European Patent Office

Office européen des brevets

(19)

(11) Veröffentlichungsnummer: **0 000 562**
**B1**

(12) **EUROPÄISCHE PATENTSCHRIFT**

(45) Veröffentlichungstag der Patentschrift: **11.11.81**

(21) Anmeldenummer: **78100467.6**

(22) Anmeldetag: **21.07.78**

(51) Int. Cl.³: **A 63 C 19/04,**
**B 32 B 27/12,**
**E 01 C 13/00, E 04 F 15/10**

(54) Zweischichtiger Bodenbelag in Sandwichbauweise für Spiel-und Sportanlagen und Verfahren zu seiner Herstellung.

(30) Priorität: **25.07.77 CH 9256/77**

(43) Veröffentlichungstag der Anmeldung:
**07.02.79 Patentblatt 79/3**

(45) Bekanntmachung des Hinweises auf die Patenterteilung:
**11.11.81 Patentblatt 81/45**

(84) Benannte Vertragsstaaten:
**BE DE FR GB LU NL SE**

(56) Entgegenhaltungen:
**GB - A - 1 368 083**
**GB - A - 1 415 852**

(73) Patentinhaber: **Ronc, Walter**
**Drisglernstrasse 43**
**CH-8107 Buchs ZH (CH)**

(72) Erfinder: **Ronc, Walter**
**Drisglernstrasse 43**
**CH-8107 Buchs ZH (CH)**

(74) Vertreter: **Widmer, Serge**
**c/o TriboTech AG Postfach**
**CH-6370 Stans (CH)**

Courier Press, Leamington Spa, England.

Zweischichtiger Bodenbelag in Sandwichbauweise für Spiel- und Sportanlagen und Verfahren zu seiner Herstellung

Gegenstand der Erfindung ist ein zweischichtiger Bodenbelag in Sandwichbauweise für Spiel- und Sportanlagen, bestehend aus einer Kunststoff-Unterschicht und einer Oberschicht aus synthetischen Hochpolymerfasern.

Es gibt eine ganze Reihe verschiedener Kunststoffbeläge, die beim Bau von Sportanlagen verwendet werden, wie z.B. das Tartan. Es ist unbestritten, dass durch den Einsatz solcher Kunststoffbeläge die Wirtschaftlichkeit von Sportanlagen stark verbessert wird und infolge der physikalischen Eigenschaften dieser Böden sehr oft bedeutende Leistungssteigerungen erzielt werden. Diese Beläge sind zudem wartungsfrei, relativ witterungsbeständig und besitzen eine gute Abriebfestigkeit.

Weil die heutigen Kunststoffbeläge durch Einschluss von Altgummischnitzeln oder Kunststoffgranulat eine Elastizität ohne Dämpfungseffekt aufweisen (vgl. z.B. CH—A—503 504, 547 915, 550 014 und 565 575), ist es bis heute trotz vielen Veröffentlichungen von bedeutenden Fachleuten nicht gelungen, die nachgewiesenermassen gesundheitsschädlichen Auswirkungen von Kunststoffbelägen zu eliminieren. Die als Kunststoffsyndrom bezeichneten Auswirkungen auf den menschlichen Bewegungsapparat verursachen verschiedenartigste Ueberlastungsschäden wie auch eine Steigerung der Unfallgefahr. In einer breit angelegten Untersuchung von Prof. Dr. med. L. Prokop, Oesterr. Institut für Sportmedizin, Wien, wird festgestellt, dass "die Verwendung von Kunststoffbahnen für Training und Wettkampf mit Sicherheit eine Zunahme bestimmter pathologischer Effekte bewirkt". In die oben erwähnte Untersuchung wurde mehr als 30 verschiedene Kunststoffbeläge einbezogen und u.a. auch auf die für die gesundheitlichen Schädigungen relevanten Parameter untersucht. Dabei wird festgestellt, dass beispielsweise die isolierte Betrachtung der Elastizitätswerte zu Fehlschlüssen führt, da Elastizität nur zusammen mit der Dämpfung beurteilt werden soll. Entscheidend ist dabei die Beanspruchung des Fusses in seiner Funktion als Stossdämpfer. Auf unelastischen hartem Boden wird die Stossdämpferfunktion des Fusses maximal beansprucht, aber auch auf elastischem Boden ist diese Beanspruchung hoch, da durch die Elastizität die auftretenden Kräfte vom Boden durch Rückstoss katapultartig auf den Fuss zurückübertragen werden. Gleichzeitig werden, wie Herr Dr. med. B. Segesser von der orthopädischen Universitätsklinik Felix-Platter-Spital, Basel, in seinem Artikel "Die Belastung des Bewegungsapparats auf Kunststoffböden" feststellt, beim Auftreten des Fusses am Kunststoffbelag Eigenschwingungen von 80—100 Hz ausgelöst die zusätzlich vom Fuss und seinen die Stabilität sichernden Muskeln und Sehnen aufgefangen und gedämpf werden müssen. Neben der Dämpfungswirkung des Belages — und nicht nur seiner Elastizität — spielt auch die Oberflächengleitfähigkeit eine entscheidende Rolle bezüglich der Beanspruchung des menschlichen Bewegungsapparates. Hohe Gleitreibung oder Rutschfestigkeit blockiert die Fussbewegung und erhöht so die Beanspruchung des Bewegungsapparats, was beispielsweise zu Verstauchungen oder Meniskusverletzungen führen kann.

In einer Untersuchung durch das Laboratorium für Biomechanik der Eidgenössischen Technischen Hochschule, Zürich (Dr. B. Nigg) wurde die Belastung des menschlichen Bewegungsapparats durch verschiedene Bodenbeläge untersucht. Dabei schnitt der Kunststoffbelag am schlechtesten ab; die Mittelwerte lagen etwas höher als bei Asphalt und 81% höher als bei Rasen sowie 40% höher als bei der konventionellen Aschenbahn.

Die der Erfindung zugrunde liegende Aufgabe besteht deshalb darin, einen Bodenbelag für Spiel- und Sportanlagen, sowie ein Verfahren zu seiner Herstellung zu entwickeln, wobei der Bodenbelag eine gute stoßdämpfende Wirkung und eine den menschlichen Bewegungsapparat nicht hoch beanspruchende, Gleitreibung haben soll, einfach herstellbar ist und wirtschaftlich verlegt und unterhalten werden kann. Ein solcher Belag ist seit Jahren eine Forderung der Sportmediziner und vor allem der Sportler. Trotzdem ist es bis jetzt nicht gelungen, einen entsprechenden Bodenbelag herzustellen. Diese Aufgabe wird gelöst durch die Kombination eines die Unterschicht bildenden Flächengebildes aus einem gegebenenfalls perforierten, geschlossenzelligen vernetzten Polyäthylen-Schaumstoff mit einem max. Raumgewicht von 35 kg/m³ und einem als Oberschicht dienenden Flächengebilde aus synthetischen Hochpolymerfasern in Form eines mindestens 2 Millionen Einstiche pro m² aufweisenden genadelten Vlieses, wobei beide Flächengebilde mindestens je 5 mm dick sein müssen.

Die Herstellung des zweischichtigen Bodenbelags in Sandwichbauweise ist erfindungsgemäss dadurch gekennzeichnet, dass die beiden Schichten bahnförmig mittels Flammschweissen miteinander verbunden werden.

Die Verbindung von Polyäthylen-Schaumstoff und einem Nadelfilz in Sandwichbauweise, insbesondere mittels Flammverschweissen ist grundsätzlich bekannt (vgl. dazu GB—A—1.368.083 und GB—A—1.415.852). Die vorbektannten Anwendungen (z.B. für Teppiche oder Polsterung) entbehren jedoch völlig der für die erfindungsgemässe Verwendung notwendigen Spezifikationen, sowie insbesondere auch des erfindungsgemässen Kombinationsgedankens, d.h. in erster Linie der Erzeilung eines neuartigen überraschenden Dämpfungseffektes, dem durch den Einstaz der erfindungsgemässen Kombination im Sportplatzbau eine entscheidende Bedeutung bei der Verhinderung gesundheitsschädlicher Auswirkungen auf den menschlichen Bewegungsapparat zukommt. Durch die erfindungsgemässe Kombination, d.h. die Verbindung von Polyäthylen-Schaumstoff mit einem genadelten Vlies gemäss den im Patentanspruch definierten Spezifikationen, wird ein im Sportplatzbau absolut neuartigen technischen Effekt erzielt (Dämpfungseffekt), der in keiner Art und Weise aus vorveröffentlichten Patentschriften oder anderen Schrift- und Bildwerken bekannt ist.

Das Flammschweissverfahren, das normalerweise bei Kaschierungen verwendet wird, ermöglicht es, im Gegensatz etwa zu den üblicherweise bei Bodenbelägen in Sandwichbauweise verwendeten Klebern, eine Haltbarkeit und Witterungsbeständigkeit zu erreichen, die um ein Vielfaches höher liegt als bei Verwendung von Klebstoffen. Entscheidend ist aber auch, dass der Einstaz von Klebstoffen eine Verhärtung des textilen Materials zur Folge hat, wodurch die Lebensdauer des Belages stark beeinträchtigt wird.

Das Verlegen in Bahnen oder Platten bringt zudem eine wesentliche Arbeitseinsparung gegenüber dem verflüssigtem Einbringen von Materialien (wie z.B. in der CH—A—565 575).

Anhand einer Zeichnung ist ein Ausführungsbeispiel des erfindungsgemässen zweischichtigen Belags in Sandwichbauweise rein schematisch im Querschnitt dargestellt und nachstehend erläutert.

Die Trittoberschicht besteht aus einem genadelten Vlies (1) aus synthetischen Polypropylenfasern, das eine Nadelung von mindestens 2 Millionen Einstichen (2)/pro m² aufweist. Je nach Sportart liegt die notwendige Vernadelung bei 2 Millionen bis 3,5 Millionen Einstichen/m², wobei sich beispielsweise für Tennisplätze eine Nadelung von 3 Millionen Einstichen/m² als vorteilhaft erwiesen hat. Die Trittoberschicht ist wasserdurchlässig, witterungs- und verrottungsfest Dieses Vlies 1 wird nun mittels des oben erwähnten Flammschweissens ohne Klebschicht oder irgend eine andere Zwischenschicht mit einem geschlossenzelligen vernetzten Polyäthylen-Schaumstoff (3) verbunden, der luftgefüllte Hohlräume 4 aufweist. Durch die Kombination der Schichten 1 und 3 mit Hilfe des oben erwähnten Verfahrens wird nun ein synergistischer Effekt inbezung auf die Gebrauchstüchtigkeit des Verbundmaterials erreicht, der in verschiedener Hinsicht verblüffend ist.

Die von Leistungssportlern geforderte hohe Trittsicherheit erfordert normalerweise eine hohe Gleitreibung mit den oben genannten Nachteilen. Der erfindungsgemäss hergestellte Belag ermöglicht, selbst bei nassem Boden, eine hohe Trittsicherheit, mindert aber die Gleitreibung durch die hohe Vernadelung der textilen Oberfläche und die dämpfende Wirkung der geschlossenzelligen Unterschicht. Im Gegensatz zu den heutigen Kunststoffbelägen bewirkt die in den Zellen der Underschicht eingeschlossene Luft eine sehr gute Stossdämpfung beim Aufprall des Fusses, wie dies heute nur bei natürlichen Unterlagen wie beispielsweise Rasen oder Sand der Fall ist. Insbesondere wird der Bewegungsapparat nicht durch einen katapultartigen Rückstoss belastet und so übermässig beansprucht. Dank der Absorption des Druckes durch die Unterschicht ergibt sich zudem eine stark erhöhte Abriebfestigkeit der Trittoberschicht.

Nach einer besonders vorteilhaften Ausführungsform der Erfindung weist die Unterschicht eine Dicke von 5,5 mm auf, die Oberschicht eine solche von 6 mm.

Um einen möglichst optimalen Dämpfungseffekt ohne entsprechende Leistungseinbusse zu erhalten, weist die Unterschicht vorzugsweise ein Raumgewicht von 30 kg/m³ auf. Konkret wird dies beispielsweise mit dem von Dynamit Nobel entwickelten PE-Schaumstoff "Trocellen" erreicht.

Für die Anwendung dieses Belages in Freiluftsportstäten ist die Wasserdurchlässigkeit des Belages eine unbedingte Voraussetzung. Da der Polyäthylen-Schaumstoff wasserundurchlässig ist, musste hier eine entsprechende Lösung gefunden werden. Diese besteht darin, den Polyäthylen-Schaumstoff zu perforieren (5), womit die Wasserdurchlässigkeit gegeben ist. Sehr gute Resultate wurden erzielt mit einem Lochdurchmesser von 4 bis 5 mm und einem Lochabstand von 20 bis 30 mm.

Hier zeigt sich ein weiterer bedeutender Vorteil des Flammschweissverfahrens genüber der Verwendung von Klebstoffen, indem die Haftfestigkeit nicht abhängig ist vom Verhältnis der verklebten Fläche zur freien Fläche (wie beispielsweise in der CH—A—550 014 beschrieben), denn der Forderung nach Haftfestigkeit, d.h. möglichst grossem Anteil an verklebter Fläche ist die Forderung nach Wasserdurchlässigkeit, d.h. möglichst wenig verklebter Fläche, diametral entgegengesetzt.

Die Wasserdurchlässigkeit beeinflusst stark die Benützbarkeit des Bodens nach Regenfall, was beispielsweise für Tennisplätze von entscheidender Bedeutung ist. Es wurden deshalb Versuche auf verschiedenen Unterbaumaterialien durchgeführt (poröser und glatter Beton; rauher, poröser und glatter Asphalt; poröser Zement und Zement-Formsteine). Alle diese Versuche ergaben selbst bei nassem Belag eine gute Bespielbarkeit und zeigten zudem eine ausgezeichnete Wasserdurchlässigkeit ohne Beeinträchtigung der synergistischen Effekte des Verbundbelages.

Die stossdämpfende Wirkung des erfindungsgemässen Belages in Verbindung mit der hohen Gleitsicherheit prädestinieren ihn aber auch für den Einsatz in Schulhäusern und öffentlichen Gebäuden sowie für Geh- und Fahrwege, dies um so mehr, als auch die schall- und wärmeisolierenden Eigenschaften ausgezeichnet sind.

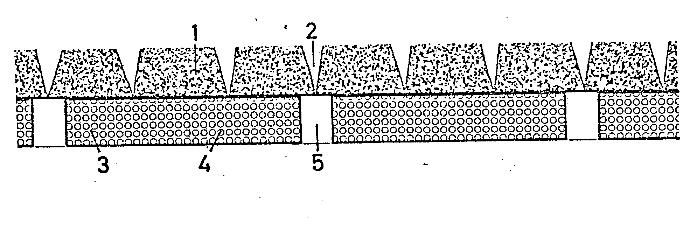

## Patentansprüche

1. Zweischichtiger Bodenbelag in Sandwichbauweise für Spiel- und Sportanlagen, dadurch gekennzeichnet, dasser aus zwei jeweils mindestens 5 mm dicken Flächengebilden zusammengesetzt ist, die mittels Flammschweißen miteinander verbunden sind, wobei das die Unterschicht bildende Flächengebilde aus einem gegebenenfalls perforierten, geschlossenzelligen vernetzten Polyäthylen-Schaumstoff mit einem maximalen Raumgewicht von 35 kg/m$^3$ besteht und das die Oberschicht bildende Flächengebilde in Form eines mindestens 2 Millionen Einstiche pro m$^2$ aufweisenden genadelten Vlieses aus synthetischen Hochpolymerfasern vorliegt.

2. Bodenbelag nach Patentanspruch 1, dadurch gekennzeichnet, dass die Unterschicht aus Polyäthylen-Schaumstoff eine Dicke von 5,5 mm aufweist und die Oberschicht eine solche von 6,0 mm.

3. Bodenbelag nach Patentanspruch 1, dadurch, gekennzeichnet, dass die Unterschicht aus Polyäthylen-Schaumstoff ein Raumgewicht von 30 kg/m$^3$ aufweist.

4. Bodenbelag mit perforierter Unterschicht nach Patentanspruch 1, dadurch gekennzeichnet, dass die Perforationen einen Lochdruchmesser von 4 bis 5 mm aufweisen, wobei der Lochabstand 20 bis 30 mm beträgt.

5. Bodenbelag nach dem Patentanspruch 1, dadurch gekennzeichnet, dass das als Oberschicht dienende Vlies eine Nadelung von drei Millionen Einstichen pro m$^2$ aufweist.

6. Verfahren zur Herstellung des zweischichtigen Bodenbelags in Sandwichbauweise nach Patentanspruch 1, dadurch gekennzeichnet, dass die beiden Schichten bahnförmig mittels Flammschweissen miteinander verbunden werden.

## Revendications

1. Un revêtement de sol en construction sandwich pour les installations ludiques et sportives caractérisé par le fait qu'il se compose de deux couches épaisses d'au moins 5 mm assemblées par soudage à chaud, la couche inférieure étant formée de mousse polyéthilènique réticulaire à structure alvéolaire fermée de poids volumique maximum de 35 kg/m$^3$ et perforée, la couche supérieure se composant d'une nappe aiquilletée a base de fibres synthétiques hautement polymérisée avec un aiguilletage de 2 millions de points/m$^2$.

2. Revêtement comme pour la revendication (1) caractérisé par une couche inférieure de mousse polyéthilènique d'une épaisseur de 5,5 mm, la couche supérieure ayant une épaisseur de 6,0 mm.

3. Revêtement comme dans revendication (1) caractérisé par une couche inférieure en mousse polyéthilènique d'un poids volumique de 30 kg/m$^3$.

4. Revêtement avec couche inférieure perforée comme dans la revendication (1) caractérisé par des perforations de 4 à 5 mm espacées de 20 à 30 mm.

5. Revêtement comme dans revendication (1) caractérisé par un textile servant de couche supérieure ayant un aiguilletage de 3 (trois) millions de points/m$^2$.

6. Procédé de fabrication de ce revêtement sandwich de la revendication 1 caractérisé par un soudage par bande des deux couches en utilisant le procédé de soudage à chaud dit par flamme.

## Claims

1. Double-layer sandwich-structure floor covering for playgrounds and sports facilities consisting of a lower layer made of a closed-cell vulcanized polyethylene foam having a maximum density of 35 kg/m$^2$, perforated if necessary, and an upper layer consisting of a fleece with needlework with a minimum of 2 million stitches per in$^2$, said upper and said lower layers, each not less than 5 mm thick, being hot-welded together without use of adhesive.

2. Floor covering as per claim 1, wherein the lower layer made of polyethylene foam has a thickness of 5.5 millimeters and the upper surface layer a thickness of 6.0 millimeters.

3. Floor covering as per claim 1, wherein the lower layer made of polyethylene foam has a density of 30 kg/m$^2$.

4. Floor covering with perforated lower layer as per patent claim 1, wherein each perforation has a diameter of 4—5 millimeters and there is a distance between perforations of between 20 and 30 millimeters.

5. Floor covering as per patent claim 1, wherein an upper layer is made of fleece with needlework of 3 million stitches per in$^2$.

6. Process for manufacture of double-layer sandwich-structure floor covering as per patent claim 1, wherein the two layers are bound together from rolls using hot-welding.